# EUROPEAN PATENT APPLICATION

(11) **EP 4 738 774 A1**
(43) Date of publication of application: **06.05.2026**
(21) Application number: 25205048.9
(22) Date of filing: 26.09.2025
(51) Int. Cl.: H04L 41/0806, H04L 41/0893, H04L 41/12

(54) **AUTOMATIC ONBOARDING OF A PLURALITY OF DEVICES**

(30) Priority: 31.10.2024 US 202418933154
(71) Applicant: Juniper Networks, Inc., Sunnyvale, CA 94089-1206 (US)
(72) Inventor: GUPTA, Manoj, Sunnyvale, 94089 (US); PETROV, Daniel, Sunnyvale, 94089 (US); JIANG, Jie C, Sunnyvale, 94089 (US); YANG, Bo-Chieh, Sunnyvale, 94089 (US); LO, Juei Cheng, Sunnyvale, 94089 (US)
(74) Representative: D Young & Co LLP

(57) **Abstract**

Techniques are described for onboarding a plurality of devices using a network management system (NMS). The NMS has memory and one or more processors coupled to the memory, the one or more processors configured to obtain onboarding information of a first device of a plurality of devices; assign, based on obtaining onboarding information of the first device, the first device to a group of devices to be managed by the network management system; and based on assigning the first device to the group of devices to be managed by the NMS, automatically assign a second device of the plurality of devices to the group of devices to be managed by the network management system.

## Description

This application claims the benefit of US Patent Application No. 18/933,154, filed 31 October 2024, the entire contents of which is incorporated herein by reference.

### TECHNICAL FIELD

The disclosure relates generally to computer networks and, more specifically, to providing onboarding devices to networks.

### BACKGROUND

Commercial premises, such as offices, hospitals, airports, stadiums, or retail outlets, often install complex wireless network systems, including a network of wireless access points (APs), throughout the premises to provide wireless network services to one or more wireless client devices (or simply, "clients"). APs are physical, electronic devices that enable other devices to wirelessly connect to a wired network (e.g., of routers and/or switches) using various wireless networking protocols and technologies, such as wireless local area networking protocols conforming to one or more of the IEEE 802.11 standards (i.e., "WiFi"), Bluetooth / Bluetooth Low Energy (BLE), mesh networking protocols such as ZigBee or other wireless networking technologies. Many different types of wireless client devices, such as laptop computers, smartphones, tablets, wearable devices, appliances, and Internet of Things (IoT) devices, incorporate wireless communication technology and can be configured to connect to wireless access points when the device is in range of a compatible wireless access point in order to access a wired network.

### SUMMARY

Particular aspects are set out in the appended independent claims. Various optional embodiments are set out in the dependent claims.

In general, this disclosure describes techniques that enable automatic onboarding of a plurality of devices for management by a network management system (NMS). An organization may include one or more sites, each including different types of devices, such as APs, routers, switches, and/or edge devices. To manage the devices of the organization, the NMS may onboard the devices, for example, by adding (otherwise referred to as "claiming") devices to a device inventory maintained by the NMS and assigning one or more devices from the device inventory to a group of devices to be managed by the NMS, such as a group of devices of a given site of the organization. Devices are typically claimed and/or assigned to the site individually, which for an organization with a large number of sites and/or a site including a large number of devices, may require a significant amount of time and cost, and may be prone to error. In accordance with the techniques of the disclosure, the NMS may automatically onboard a plurality of devices to a group of devices to be managed by the NMS.

In some examples, the NMS may automatically onboard one or more devices that are connected to a device that has been onboarded. For example, the NMS may obtain onboarding information associated with a first device (e.g., router or switch), such as a code (e.g., claim code or activation code) of the first device, to add the first device to a device inventory from which the NMS may assign one or more devices in the device inventory to a group of devices to be managed by the NMS (e.g., a group of devices of a site). In response to claiming the first device, the first device may receive a network address of a second device (e.g., an access point) connected to the first device. For example, the first device may learn a MAC address of the second device that is directly connected to the first device, e.g., by utilizing a discovery protocol such as Link Layer Discovery Protocol (LLDP). The second device may also learn the address of the first device utilizing the discovery protocol. The NMS may obtain the MAC address of the second device from the first device and determine, based on the MAC address of the second device, whether the second device is claimed. For example, the NMS may determine whether the NMS previously obtained the MAC address of the first device from the second device, which may indicate that the second device is connected to the first device. Based on determining that the NMS has obtained the MAC address of the first device and the MAC address of the second device, the NMS may claim the second device and, if the first device is assigned to a site, automatically assign the second device to the same site.

In some examples, the NMS may automatically onboard one or more devices that route traffic through a device that has been onboarded. For example, the NMS may obtain onboarding information associated with a plurality of devices and add the plurality of devices to a device inventory from which the NMS may assign one or more devices in the device inventory to a site. The NMS may obtain a network address (e.g., IP address) of a given device (e.g., a switch or edge device) of the plurality of devices and determine geographical coordinates (e.g., longitude and latitude) of the given device based on the IP address of the given device. Based on the geographical coordinates of the given device, the NMS may determine a physical address (e.g., street number and name, city, state, zip code, etc.) of the given device. The NMS may generate a site based on the physical address and assign the given device to the site. The NMS may automatically assign one or more other devices to the same site, such as devices that route traffic to the NMS through the given device (e.g., devices that share a common source IP address for traffic to the NMS).

The techniques of this disclosure provide one or more technical advantages and practical applications. For example, by obtaining network addresses of a plurality of connected devices and utilizing the network addresses to claim and/or assign the plurality of connected devices, the NMS may onboard a plurality of devices to a site utilizing a single code of a given device of the connected devices rather than utilizing a corresponding code for each of the connected devices, which reduces the amount of time, cost, and/or errors to onboard a plurality of devices to a site. Moreover, by onboarding a plurality of devices to a site based on geographical location of a given device of the plurality of devices, the plurality of devices is onboarded to the site without needing to individually onboard each of the plurality of devices to the site, therefore reducing the amount of time, cost, and/or errors to onboard devices to the site.

The details of one or more examples of the techniques of this disclosure are set forth in the accompanying drawings and the description below. Other features, objects, and advantages of the techniques will be apparent from the description and drawings, and from the claims.

### BRIEF DESCRIPTION OF DRAWINGS

FIG. 1A is a block diagram of an example network system including a cloud-based network management system configured to automatically onboard a plurality of devices for management by the network management system, in accordance with one or more techniques of this disclosure.
FIG. 1B is a block diagram illustrating further example details of the network system of FIG. 1A.
FIG. 2 is a block diagram of an example access point device, in accordance with one or more techniques of this disclosure.
FIG. 3 is a block diagram of an example network management system, in accordance with one or more techniques of the disclosure.
FIG. 4 is a block diagram of an example network node, such as a router or switch, in accordance with one or more techniques of this disclosure.
FIG. 5 is a flowchart of an example operation to onboard a plurality of devices based on a network address of a given device of the plurality of devices, in accordance with one or more techniques of this disclosure.
FIG. 6 is a flowchart of another example operation to onboard a plurality of devices based on geographical location of at least one device of the plurality of devices, in accordance with one or more techniques of this disclosure.
FIG. 7 is a flowchart illustrating an example operation of the network management system to automatically onboard a plurality of devices, in accordance with one or more techniques of this disclosure.
FIG. 8 is a flowchart illustrating an example operation of the network management system to automatically onboard a plurality of devices based on a network address of a given device of the plurality of devices, in accordance with one or more techniques of this disclosure.
FIG. 9 is a flowchart illustrating an example operation of the network management system to automatically onboard a plurality of devices based on a geographical location of at least one device of the plurality of devices, in accordance with one or more techniques of this disclosure.

### DETAILED DESCRIPTION

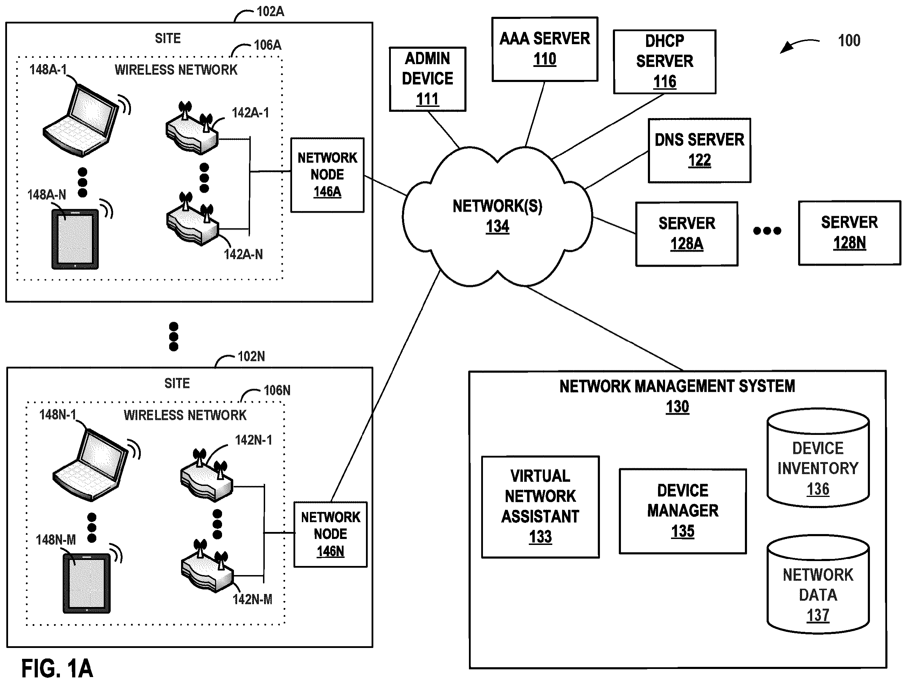

FIG. 1A is a block diagram of an example network system 100 including a cloud-based network management system (NMS) 130 configured to automatically onboard a plurality of devices for management by NMS 130, in accordance with one or more techniques of this disclosure. Example network system 100 includes a plurality sites 102A-102N at which a network service provider manages one or more wireless networks 106A-106N, respectively. Although each of sites 102A-102N is shown in FIG. 1A as including a single wireless network 106A-106N, respectively, in some examples, each of sites 102A-102N may include multiple wireless networks, and the disclosure is not limited in this respect.

Each of sites 102A-102N includes a plurality of network access server (NAS) devices, such as access points (APs) 142, routers or switches (illustrated as network nodes 146A-146N) within the wired network edge. For example, site 102A includes a plurality of APs 142A-1 through 142A-N. Similarly, site 102N includes a plurality of APs 142N-1 through 142N-M. Each of APs 142 may be any type of wireless access point, including, but not limited to, a commercial or enterprise AP, a router, or any other device that is connected to the wired network and is capable of providing wireless network access to client devices within the site. References to "N" or "M" may represent any number. References to "N" for different elements need not be the same number. Similarly, references to "M" for different elements need not be the same number.

Each of sites 102A-102N also includes a plurality of client devices, otherwise known as user equipment devices (UEs), referred to generally as UEs or client devices 148, representing various wireless-enabled devices within each site. For example, a plurality of UEs 148A-1 through 148A-N are currently located at site 102A. Similarly, a plurality of UEs 148N-1 through 148N-M are currently located at site 102N. Each UE 148 may be any type of wireless client device, including, but not limited to, a mobile device such as a smart phone, tablet or laptop computer, a personal digital assistant (PDA), a wireless terminal, a smart watch, smart ring, or other wearable device. UEs 148 may also include wired client-side devices, e.g., IoT devices such as printers, security devices, environmental sensors, or any other device connected to the wired network and configured to communicate over one or more wireless networks 106.

In order to provide wireless network services to UEs 148 and/or communicate over the wireless networks 106, APs 142 and the other wired client-side devices at sites 102 are connected, either directly or indirectly, to one or more network devices (e.g., routers, switches, or the like) via physical cables, e.g., Ethernet cables. In the example of FIG. 1A, site 102A includes a network node 146A to which each of APs 142A-1 through 142A-N at site 102A are connected. Similarly, site 102N includes a network node 146N to which each of APs 142N-1 through 142N-M at site 102N are connected. Although illustrated in FIG. 1A as if each site 102 includes a single network node 146 and all APs 142 of the given site 102 are connected to the single network node 146, in other examples, each site 102 may include more or fewer switches and/or routers. In addition, the APs and the other wired client-side devices of the given site may be connected to two or more switches and/or routers. In addition, two or more switches at a site may be connected to each other and/or connected to two or more routers, e.g., via a mesh or partial mesh topology in a hub-and-spoke architecture. In some examples, interconnected switches and routers comprise wired local area networks (LANs) at sites 102 hosting wireless networks 106.

Example network system 100 also includes various networking components for providing networking services within the wired network including, as examples, an Authentication, Authorization and Accounting (AAA) server 110 for authenticating users and/or UEs 148, a Dynamic Host Configuration Protocol (DHCP) server 116 for dynamically assigning network addresses (e.g., IP addresses) to UEs 148 upon authentication, a Domain Name System (DNS) server 122 for resolving domain names into network addresses, a plurality of servers 128A-128N (collectively "servers 128") (e.g., web servers, databases servers, file servers, application servers, and the like), and a network management system (NMS) 130. As shown in FIG. 1A, the various devices and systems of network 100 are coupled together via one or more network(s) 134, e.g., the Internet and/or an enterprise intranet.

The admin device 111 may comprise a computing device of an information technology (IT) personnel and/or administrator associated with one or more of sites 102 and/or network nodes 146 at the wired network edge. Admin device 111 may be implemented as any suitable device for presenting output and/or accepting user input. For instance, admin device 111 may include a display. Admin device 111 may be a computing system, such as a mobile or non-mobile computing device operated by a user and/or by the administrator. Admin device 111 may, for example, represent a workstation, a laptop or notebook computer, a desktop computer, a tablet computer, or any other computing device that may be operated by a user and/or present a user interface in accordance with one or more aspects of the present disclosure. Admin device 111 may be physically separate from and/or in a different location than NMS 130 such that admin device 111 may communicate with NMS 130 via network 134 or other means of communication.

As further described herein, NMS 130 provides an integrated suite of management tools and implements various techniques described in this disclosure. In the example of FIG. 1A, NMS 130 is a cloud-based computing platform that manages wireless networks 106A-106N at one or more of sites 102A-102N. For example, NMS 130 may provide a cloud-based platform for wireless and/or wired network data acquisition, monitoring, activity logging, reporting, predictive analytics, network anomaly identification, and alert generation. NMS 130 monitors network data 137 received from wireless networks 106A-106N at each site 102A-102N, respectively, and manages network resources, such as NAS devices at each site, to deliver a high-quality wireless experience to end users, IoT devices, and clients at the site. Network data 137 may include statistics of one or more APs, e.g., APs 142, such as information indicative of the connections of an AP, information of a client device associated with the AP, traffic usage by the AP, and/or other information collected and reported by the AP (referred to as "ap-stats"). Network data 137 may also include statistics of one or more network nodes, e.g., network nodes 146, such as information indicative of the connections of a network node, information of a devices connected to the network node, traffic usage by the network node, and/or other information collected and reported by the network node (referred to as "oc-stats"). Network data 137 may also include data of one or more client devices, e.g., UEs 148, such as information indicative of the connections of a client device, information of an access point associated with the client device, traffic usage by the client device, and/or other information collected and reported by the client device.

NMS 130 may include a virtual network assistant (VNA) 133 that implements an event processing platform for providing real-time insights and simplified troubleshooting for IT operations, and that automatically takes corrective action or provides recommendations to proactively address wireless network issues. VNA 133 may, for example, include an event processing platform configured to process hundreds or thousands of concurrent streams of network data 137 from sensors and/or agents associated with NAS devices (e.g., APs 142, routers or switches, such as network nodes 146, etc.) and/or nodes within network 134. For example, VNA 133 of NMS 130 may include an underlying analytics and network error identification engine and alerting system in accordance with various examples described herein. The underlying analytics engine of VNA 133 may apply historical data and models to the inbound event streams to compute assertions, such as identified anomalies or predicted occurrences of events constituting network error conditions. Further, VNA 133 may provide real-time alerting and reporting to notify a site or network administrator via admin device 111 of any predicted events, anomalies, trends, and may perform root cause analysis and automated or assisted error remediation. In some examples, VNA 133 of NMS 130 may apply machine learning techniques to identify the root cause of error conditions detected or predicted from the streams of network data 137. If the root cause may be automatically resolved, VNA 133 may invoke one or more corrective actions to correct the root cause of the error condition, thus automatically improving underlying service level expectation/experience (SLE) metrics and also automatically improving the user experience.

Further example details of operations implemented by the VNA 133 of NMS 130 are described in U.S. Patent No. 9,832,082, issued November 28, 2017, and entitled "Monitoring Wireless Access Point Events," U.S. Publication No. US 2021/0306201, published September 30, 2021, and entitled "Network System Fault Resolution Using a Machine Learning Model," U.S. Patent No. 10,985,969, issued April 20, 2021, and entitled "Systems and Methods for a Virtual Network Assistant," U.S. Patent No. 10,958,585, issued March 23, 2021, and entitled "Methods and Apparatus for Facilitating Fault Detection and/or Predictive Fault Detection," U.S. Patent No. 10,958,537, issued March 23, 2021, and entitled "Method for Spatio-Temporal Modeling," and U.S. Patent No. 10,862,742, issued December 8, 2020, and entitled "Method for Conveying AP Error Codes Over BLE Advertisements," all of which are incorporated herein by reference in their entirety.

NMS 130 may also provide a cloud-based platform for onboarding devices for management by NMS 130. NMS 130 may obtain information associated with a device, such as a code (otherwise referred to herein as a "claim code" or "activation code"), that is used to add (i.e., "claim") the device to a device inventory from which NMS 130 may assign one or more devices in the device inventory to a group of devices to be managed by NMS 130. For example, network node 146A may include a claim code, such as a quick response (QR) code, which NMS 130 may obtain and use to add network node 146A to a device inventory from which NMS 130 may assign network node 146A to site 102A for management by NMS 130.

To onboard a plurality of devices to a network of a site, each device is typically claimed and/or assigned to the site individually. For an organization including a large number of sites or a site including a large number of devices, individually claiming and/or assigning the devices to the site may require a significant amount of time and cost, and may be prone to error.

In accordance with the techniques described in this disclosure, NMS 130 includes device manager 135 configured to provide automatic onboarding of a plurality of devices for management by NMS 130. As further described below, device manager 135 of NMS 130 may, in some examples, automatically onboard one or more devices that are connected to a device that has been onboarded based on, for example, a network address of a given device of the plurality of devices. In some examples, NMS 130 may automatically onboard one or more devices that route traffic through a device that has been onboarded based on, for example, a geographical location of at least one device of the plurality of devices.

In the example of FIG. 1A, device manager 135 of NMS 130 may onboard network node 146A and automatically onboard one or more devices (e.g., APs 142A-1) connected to network node 146A to a site 102A. For example, network node 146A may include a code (e.g., claim code, activation code, QR code, etc.) that uniquely identifies network node 146A. Device manager 135 may obtain the code of network node 146A and add (i.e., "claim") network node 146A to device inventory 136 from which NMS 130 may assign one or more devices in device inventory 136 to site 102A. In response to adding network node 146A to device inventory 136 and/or assigning network node 146A to site 102A, network node 146A may exchange information with a device connected to network node 146A, such as AP 142A-1. The information exchanged between the connected devices may include network addresses of the devices, such as MAC addresses of the devices. For example, network node 146A may use a discovery protocol, such as Link Layer Discovery Protocol (LLDP), to send a MAC address of network node 146A to AP 142A-1. Similarly, AP 142A-1 may use the discovery protocol to send a MAC address of AP 142A-1 to network node 146A. As further described below, NMS 130 may claim AP 142A-1 based on the network addresses (e.g., MAC addresses) of the devices, and in some examples, automatically assign AP 142A-1 to site 102A if network node 146A is assigned to site 102A.

In some examples, device manager 135 of NMS 130 may onboard network node 146A and automatically onboard one or more devices (e.g., APs 142A-1) that route traffic to NMS 130 through network node 146A to a site 102A. For example, device manager 135 of NMS 130 may obtain onboarding information associated with a plurality of devices, such as a network device (e.g., network node 146A) and one or more devices that route traffic to NMS 130 through the network device (e.g., one or more of AP 142A-1 through AP 142A-N, etc.). Device manager of 135 NMS 130 may add the plurality of devices to device inventory 135 with which device manager 135 of NMS 130 may assign one or more devices in device inventory 135 to site 102A. For example, device manager 135 of NMS 130 may obtain an IP address of network node 146A and determine a geographical location of network node 146A based on the IP address of network node 146A. For example, device manager 135 of NMS 130 may send a request to a geographical location provider, which in turn may determine the geographical coordinates of network node 146A based on the IP address of network node 146A and send the geographical coordinates of network node 146A to NMS 130. Based on the geographical coordinates of network node 146A, device manager 135 of NMS 130 may determine a physical address (e.g., street number and name, city, state, zip code, etc.) of network node 146A. For example, device manager 135 of NMS 130 may send a request to a physical address provider to determine a physical address of network node 146A based on the geographical location of network node 146A. Device manager 135 of NMS 130 may generate, based on the physical address of network node 146A, a group of devices to be managed by NMS 130, such as a group of devices of site 102A. For example, device manager 135 of NMS 130 may generate a group name (e.g., site name for site 102A) that is based on the physical address, such as a human-readable descriptor specifying at least a portion of the physical address (e.g., street number and name, city, etc.), and assign network node 146A to the generated site. As further described below, device manager 135 of NMS 130 may further assign one or more other devices that route traffic to NMS 130 through network node 146A (e.g., devices that share a common source IP address for traffic to the NMS), such as one or more of APs 142A-1 through AP 142A-N.

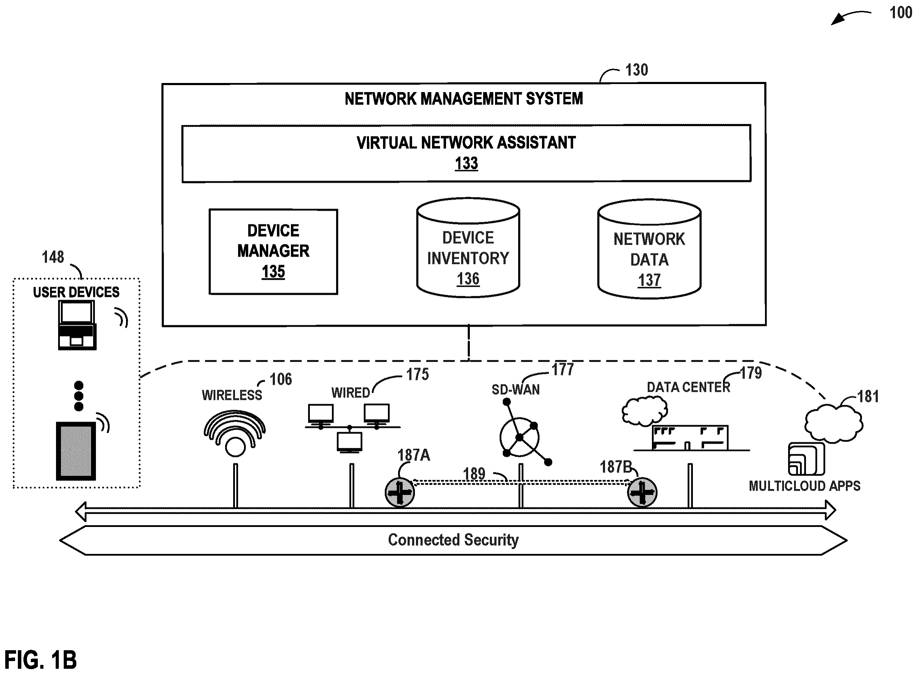

FIG. 1B is a block diagram illustrating further example details of the network system of FIG. 1A. In this example, FIG. 1B illustrates NMS 130 configured to operate according to an artificial intelligence / machine-learning-based computing platform providing comprehensive automation, insight, and assurance (WiFi Assurance, Wired Assurance and WAN assurance) spanning from wireless network 106 and wired LAN 175 networks at the network edge (far left of FIG. 1B) to cloud-based application services 181 hosted by computing resources within data centers 179 (far right of FIG. 1B).

As described herein, NMS 130 provides an integrated suite of management tools and implements various techniques of this disclosure. In general, NMS 130 may provide a cloud-based platform for onboarding of devices, wireless network and/or wired network data acquisition, monitoring, activity logging, reporting, predictive analytics, network anomaly identification, and alert generation. Once devices in network 100 are onboarded, NMS 130 may proactively monitor and adaptively configure network 100 so as to provide self-driving capabilities. For example, VNA 133 includes a natural language processing engine to provide AI-driven support and troubleshooting, anomaly detection, AI-driven location services, and AI-driven RF optimization with reinforcement learning of network 100.

As illustrated in the example of FIG. 1B, AI-driven NMS 130 also provides configuration management, monitoring and automated oversight of software defined wide-area network (SD-WAN) 177, which operates as an intermediate network communicatively coupling wireless networks 106 and wired LANs 175 to data centers 179 and application services 181. In general, SD-WAN 177 provides seamless, secure, traffic-engineered connectivity between "spoke" routers 187A of edge wired networks 175 hosting wireless networks 106, such as branch or campus networks, to "hub" routers 187B further up the cloud stack toward cloud-based application services 181. SD-WAN 177 often operates and manages an overlay network on an underlying physical Wide-Area Network (WAN), which provides connectivity to geographically separate customer networks. In other words, SD-WAN 177 extends Software-Defined Networking (SDN) capabilities to a WAN and allows network(s) to decouple underlying physical network infrastructure from virtualized network infrastructure and applications such that the networks may be configured and managed in a flexible and scalable manner. Once devices in SD-WAN 177 are onboarded, NMS 130 may provide configuration management, monitoring and automated oversite of the onboarded devices in SD-WAN 177.

In some examples, underlying routers of SD-WAN 177 may implement a stateful, session-based routing scheme in which the routers 187A, 187B dynamically modify contents of original packet headers sourced by client devices 148 to steer traffic along selected paths, e.g., path 189, toward application services 181 without requiring use of tunnels and/or additional labels. In this way, routers 187A, 187B may be more efficient and scalable for large networks since the use of tunnel-less, session-based routing may enable routers 187A, 187B to achieve considerable network resources by obviating the need to perform encapsulation and decapsulation at tunnel endpoints. Moreover, in some examples, each router 187A, 187B may independently perform path selection and traffic engineering to control packet flows associated with each session without requiring use of a centralized SDN controller for path selection and label distribution. In some examples, routers 187A, 187B implement session-based routing as Secure Vector Routing (SVR), provided by Juniper Networks, Inc.

Additional information with respect to session-based routing and SVR is described in U.S. Patent No. 9,729,439, entitled "COMPUTER NETWORK PACKET FLOW CONTROLLER," and issued on August 8, 2017; U.S. Patent No. 9,729,682, entitled "NETWORK DEVICE AND METHOD FOR PROCESSING A SESSION USING A PACKET SIGNATURE," and issued on August 8, 2017; U.S. Patent No. 9,762,485, entitled "NETWORK PACKET FLOW CONTROLLER WITH EXTENDED SESSION MANAGEMENT," and issued on September 12, 2017; U.S. Patent No. 9,871,748, entitled "ROUTER WITH OPTIMIZED STATISTICAL FUNCTIONALITY," and issued on January 16, 2018; U.S. Patent No. 9,985,883, entitled "NAME-BASED ROUTING SYSTEM AND METHOD," and issued on May 29, 2018; U.S. Patent No. 10,200,264, entitled "LINK STATUS MONITORING BASED ON PACKET LOSS DETECTION," and issued on February 5, 2019; U.S. Patent No. 10,277,506, entitled "STATEFUL LOAD BALANCING IN A STATELESS NETWORK," and issued on April 30, 2019; U.S. Patent No. 10,432,522, entitled "NETWORK PACKET FLOW CONTROLLER WITH EXTENDED SESSION MANAGEMENT," and issued on October 1, 2019; and U.S. Patent Application Publication No. 2020/0403890, entitled "IN-LINE PERFORMANCE MONITORING," published on December 24, 2020, the entire content of each of which is incorporated herein by reference in its entirety.

In some examples, Al-driven NMS 130 may enable intent-based configuration and management of network system 100, including enabling construction, presentation, and execution of intent-driven workflows for configuring and managing devices associated with wireless networks 106, wired LAN networks 175, and /or SD-WAN 177. For example, declarative requirements express a desired configuration of network components without specifying an exact native device configuration and control flow. By utilizing declarative requirements, what should be accomplished may be specified rather than how it should be accomplished. Declarative requirements may be contrasted with imperative instructions that describe the exact device configuration syntax and control flow to achieve the configuration. By utilizing declarative requirements rather than imperative instructions, a user and/or user system is relieved of the burden of determining the exact device configurations required to achieve a desired result of the user/system. For example, it is often difficult and burdensome to specify and manage exact imperative instructions to configure each device of a network when various different types of devices from different vendors are utilized. The types and kinds of devices of the network may dynamically change as new devices are added and device failures occur. Managing various different types of devices from different vendors with different configuration protocols, syntax, and software versions to configure a cohesive network of devices is often difficult to achieve. Thus, by only requiring a user/system to specify declarative requirements that specify a desired result applicable across various different types of devices, management and configuration of the network devices becomes more efficient. Further example details and techniques of an intent-based network management system are described in US Patent 10,756,983, entitled "Intent-based Analytics," and US Patent 10,992,543, entitled "Automatically generating an intent-based network model of an existing computer network," each of which is hereby incorporated by reference.

In accordance with the techniques described in this disclosure, NMS 130 enables the automatic onboarding of a plurality of devices for management by NMS 130. As further described below, device manager 135 of NMS 130 may, in some examples, automatically onboard one or more devices that are connected to a device that has been onboarded based on, for example, a network address of a given device of the plurality of devices. In some examples, NMS 130 may automatically onboard one or more devices that route traffic through a device that has been onboarded based on, for example, a geographical location of at least one device of the plurality of devices.

For example, NMS 130 may obtain onboarding information (e.g., claim code) of router 187A in SD-WAN 177, add router 187A to device inventory 136, and assign router 187A to a group of devices to be managed by NMS 130, such as a site including wired network 175 and/or wireless network 106. Based on assigning router 187A to the site, NMS 130 may automatically assign one or more devices connected to router 187A to the same site, such as one or more devices in wireless network 106 (e.g., APs) or wired network 175 (e.g., routers or switches). As further described below, NMS 130 may obtain a network address (e.g., MAC address) of a device connected to router 187A, and may onboard the device connected to router 187A based on the network address of the device.

As another example, device manager 135 of NMS 130 may be configured to automatically onboard a plurality of devices based on a geographical location of network device, such as router 187A in SD-WAN 177. In this example, NMS 130 may obtain onboarding information (e.g., claim code) of router 187A and assign router 187A to a site generated based on an IP address of router 187A. Based on assigning router 187A to the site, NMS 130 may automatically assign one or more devices that route traffic to NMS 130 through router 187A, such as one or more devices in wired network 175 and/or wireless network 106.

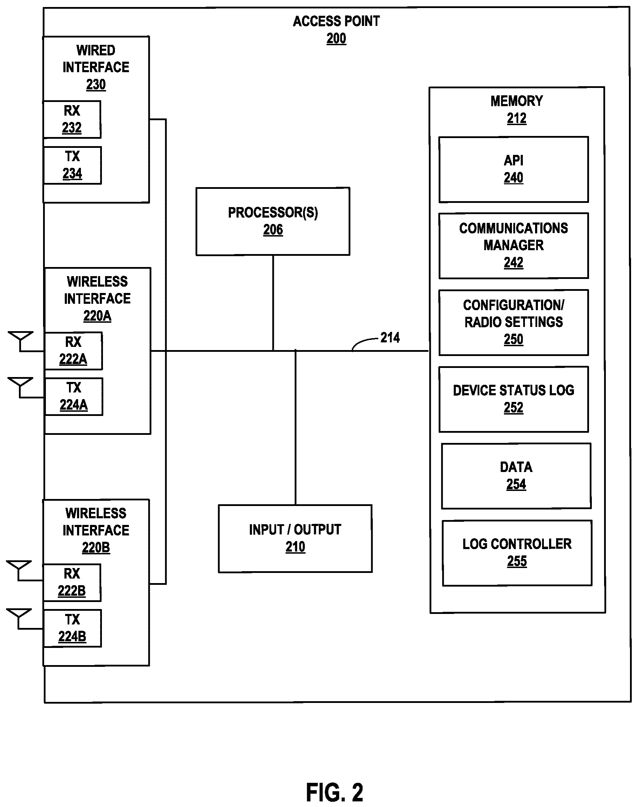

FIG. 2 is a block diagram of an example access point (AP) device 200 configured in accordance with one or more techniques of this disclosure. Example access point 200 shown in FIG. 2 may be used to implement any of APs 142 as shown and described herein with respect to FIG. 1A. Access point 200 may comprise, for example, a Wi-Fi, Bluetooth and/or Bluetooth Low Energy (BLE) base station or any other type of wireless access point.

In the example of FIG. 2, access point 200 includes a wired interface 230, wireless interfaces 220A-220B, one or more processor(s) 206, memory 212, and input/output 210 coupled together via a bus 214 over which the various elements may exchange data and information. Wired interface 230 represents a physical network interface and includes a receiver (RX) 232 and a transmitter (TX) 234 for sending and receiving network communications, e.g., packets. Wired interface 230 couples, either directly or indirectly, access point 200 to one or more network devices (e.g., network nodes 146 of FIG. 1A) that provide access to network(s) 134 of FIG. 1A. First and second wireless interfaces 220A and 220B represent wireless network interfaces and include receivers (RX) 222A and 222B, respectively, each including a receive antenna via which access point 200 may receive wireless signals from wireless communications devices, such as UEs 148 of FIG. 1A. First and second wireless interfaces 220A and 220B further include transmitters (TX) 224A and 224B, respectively, each including transmit antennas via which access point 200 may transmit wireless signals to wireless communications devices, such as UEs 148 of FIG. 1A. In some examples, first wireless interface 220A may include a Wi-Fi 802.11 interface (e.g., 2.4 GHz and/or 5 GHz) and second wireless interface 220B may include a Bluetooth interface and/or a Bluetooth Low Energy (BLE) interface.

Processor(s) 206 are programmable hardware-based processors configured to execute software instructions, such as those used to define a software or computer program, stored to a computer-readable storage medium (such as memory 212), such as non-transitory computer-readable mediums including a storage device (e.g., a disk drive, or an optical drive) or a memory (such as Flash memory or RAM) or any other type of volatile or non-volatile memory, that stores instructions to cause the one or more processors 206 to perform the techniques described herein. Such software instructions may also or alternatively be received by the processor(s) 206 for execution by way of a computer readable transmission medium (such as wired interface 230, wireless interface 220A, 220B and/or bus 214).

Memory 212 includes one or more devices configured to store programming modules and/or data associated with operation of access point 200. For example, memory 212 may include a computer-readable storage medium, such as non-transitory computer-readable mediums including a storage device (e.g., a disk drive, or an optical drive) or a memory (such as Flash memory or RAM) or any other type of volatile or non-volatile memory, that stores instructions to cause the one or more processor(s) 206 to perform the techniques described herein.

In this example, memory 212 stores executable software including an application programming interface (API) 240, a communications manager 242, configuration settings 250, a device status log 252, data storage 254, and log controller 255. Device status log 252 includes a list of events specific to access point 200. The events may include a log of both normal events and error events such as, for example, memory status, reboot events, crash events, Ethernet port status, upgrade failure events, firmware upgrade events, configuration changes, etc., as well as a time and date stamp for each event. Log controller 255 determines a logging level for the device based on instructions from NMS 130. Data 254 may store any data used and/or generated by access point 200, including data received from a device connected to access point 200, such as a network address (e.g., MAC address) of the device connected to access point 200 (e.g., a router or switch). Access point 200 may send data 254 to NMS 130 for onboarding access point 200, such as by automatically assigning access point 200 to the same site as assigned to the device connected to access point 200.

Input/output (I/O) 210 represents physical hardware components that enable interaction with a user, such as buttons, a display, and the like. Although not shown, memory 212 typically stores executable software for controlling a user interface with respect to input received via I/O 210.

Communications manager 242 includes program code that, when executed by processor(s) 206, allow access point 200 to communicate with UEs 148 and/or network devices that provide access to network(s) 134 via any of interface(s) 230 and/or 220A-220C. Configuration settings 250 include any device settings for access point 200 such as radio settings for each of wireless interface(s) 220A-220C. These settings may be configured manually or may be remotely monitored and managed by NMS 130 to optimize wireless network performance on a periodic (e.g., hourly or daily) basis.

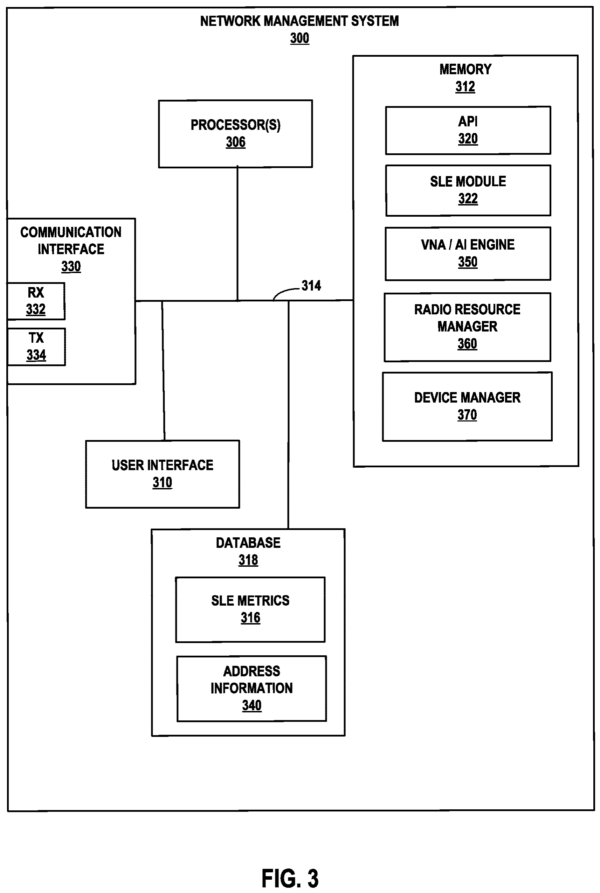

FIG. 3 shows an example NMS 300 having a device manager 370 configured to automatically onboard a plurality of devices for management by NMS 300, in accordance with one or more techniques of this disclosure. NMS 300 and device manager 370 may operate substantially similar to NMS 130 and device manager 136 of FIG. 1A. In such examples, NMS 300 is responsible for monitoring and management of one or more wireless networks 106A-106N at sites 102A-102N, respectively. In some examples, NMS 300 receives data collected by APs 142 and network nodes 146, such as address information used to onboard APs 142 and routers 187 for management by NMS 300.

NMS 300 includes a communications interface 330, one or more processor(s) 306, a user interface 310, a memory 312, and a database 318. The various elements are coupled together via a bus 314 over which the various elements may exchange data and information.

Processor(s) 306 execute software instructions, such as those used to define a software or computer program, stored to a computer-readable storage medium (such as memory 312), such as non-transitory computer-readable mediums including a storage device (e.g., a disk drive, or an optical drive) or a memory (such as Flash memory or RAM) or any other type of volatile or non-volatile memory, that stores instructions to cause the one or more processors 306 to perform the techniques described herein. Such software instructions may also or alternatively be received by the processor(s) 306 for execution by way of a computer readable transmission medium (such as communication interface 330 and/or bus 314).

Communications interface 330 may include, for example, an Ethernet interface. Communications interface 330 couples NMS 300 to a network and/or the Internet, such as any of network(s) 134 as shown in FIG. 1A, and/or any local area networks. Communications interface 330 includes a receiver (RX) 332 and a transmitter (TX) 334 by which NMS 300 receives/transmits data and information to/from any of APs 142, network node 146, servers 110, 116, 122, 128 and/or any other devices or systems forming part of network 100 such as shown in FIG. 1A. The data and information received by NMS 300 may include, for example, network addresses (e.g., MAC addresses) of connected devices (e.g., AP 142A-1 and network node 146A of FIG. 1A) with which NMS 300 may use to automatically onboard devices connected to a device that has been onboarded. In some examples, the data and information received by NMS 300 may include, for example, an IP address of a network device with which NMS 300 may use to onboard the network device and automatically onboard one or more other devices that route traffic to NMS 300 through the network device.

Memory 312 includes one or more devices configured to store programming modules and/or data associated with operation of NMS 300. For example, memory 312 may include a computer-readable storage medium, such as non-transitory computer-readable mediums including a storage device (e.g., a disk drive, or an optical drive) or a memory (such as Flash memory or RAM) or any other type of volatile or non-volatile memory, that stores instructions to cause the one or more processor(s) 306 to perform the techniques described herein.

In this example, memory 312 includes an API 320, an SLE module 322, a virtual network assistant (VNA)/AI engine 350, a radio resource management (RRM) engine 360, and a device manager 370. NMS 300 may also include any other programmed modules, software engines and/or interfaces configured for onboarding and/or remote monitoring and management of wireless networks 106A-106N, including onboarding and/or remote monitoring and management of any of APs 142, network nodes 146, etc.

SLE module 322 enables set up and tracking of thresholds for SLE metrics for each network 106A-106N. SLE module 322 further analyzes SLE-related data collected by APs, such as any of APs 142 from UEs in each wireless network 106A-106N. For example, APs 142A-1 through 142A-N collect SLE-related data from UEs 148A-1 through 148A-N currently connected to wireless network 106A. This data is transmitted to NMS 300, which executes by SLE module 322 to determine one or more SLE metrics for each UE 148A-1 through 148A-N currently connected to wireless network 106A. This data, in addition to any network data collected by one or more APs 142A-1 through 142A-N in wireless network 106A, is transmitted to NMS 300 and stored as, for example, SLE metrics 316 in database 318.

RRM engine 360 monitors one or more metrics for each site 106A-106N in order to learn and optimize the RF environment at each site. For example, RRM engine 360 may monitor the coverage and capacity SLE metrics for a wireless network 106 at a site 102 in order to identify potential issues with SLE coverage and/or capacity in the wireless network 106 and to make adjustments to the radio settings of the access points at each site to address the identified issues. For example, RRM engine may determine channel and transmit power distribution across all APs 142 in each network 106A-106N. For example, RRM engine 360 may monitor events, power, channel, bandwidth, and number of clients connected to each AP. RRM engine 360 may further automatically change or update configurations of one or more APs 142 at a site 106 with an aim to improve the coverage and capacity SLE metrics and thus to provide an improved wireless experience for the user.

VNA/AI engine 350 may operate substantially similar to VNA 132 of FIG. 1A. VNA/AI engine 350 analyzes data received from APs 142/200 as well as its own data to identify when undesired to abnormal states are encountered in one of wireless networks 106A-106N. For example, VNA/AI engine 350 may identify the root cause of any undesired or abnormal states, e.g., any poor SLE metric(s) at one or more of wireless network 106A-106N. In addition, VNA/AI engine 350 may automatically invoke one or more corrective actions intended to address the identified root cause(s) of one or more poor SLE metrics. Examples of corrective actions that may be automatically invoked by VNA/AI engine 350 may include, but are not limited to, invoking RRM 360 to reboot one or more APs, adjusting/modifying the transmit power of a specific radio in a specific AP, adding SSID configuration to a specific AP, changing channels on an AP or a set of APs, etc. The corrective actions may further include restarting a switch and/or a router, invoke downloading of new software to an AP, switch, or router, etc. These corrective actions are given for example purposes only, and the disclosure is not limited in this respect. If automatic corrective actions are not available or do not adequately resolve the root cause, VNA/AI engine 350 may proactively provide a notification including recommended corrective actions to be taken by IT personnel to address the network error.

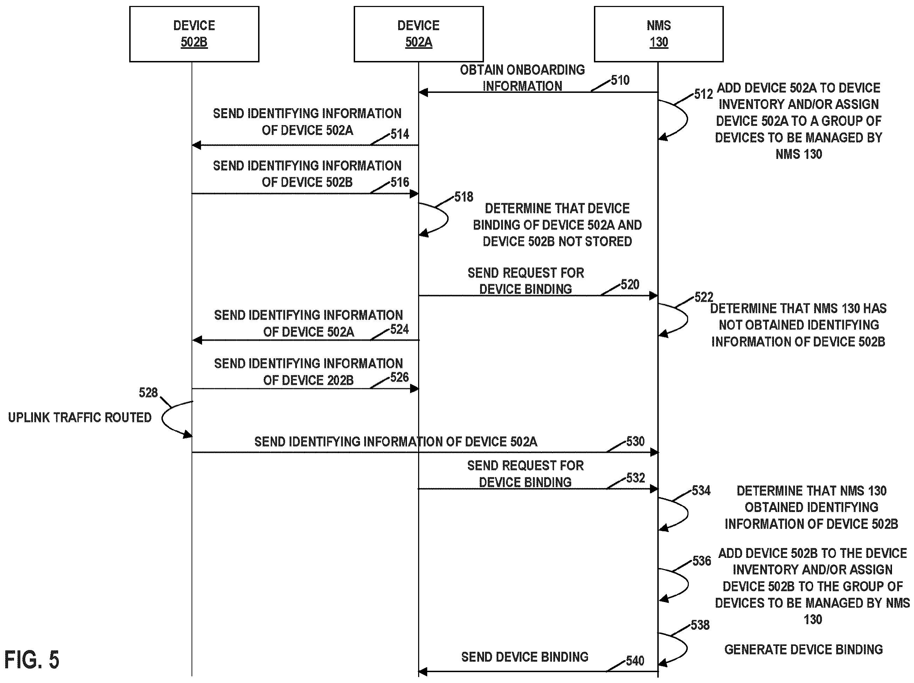

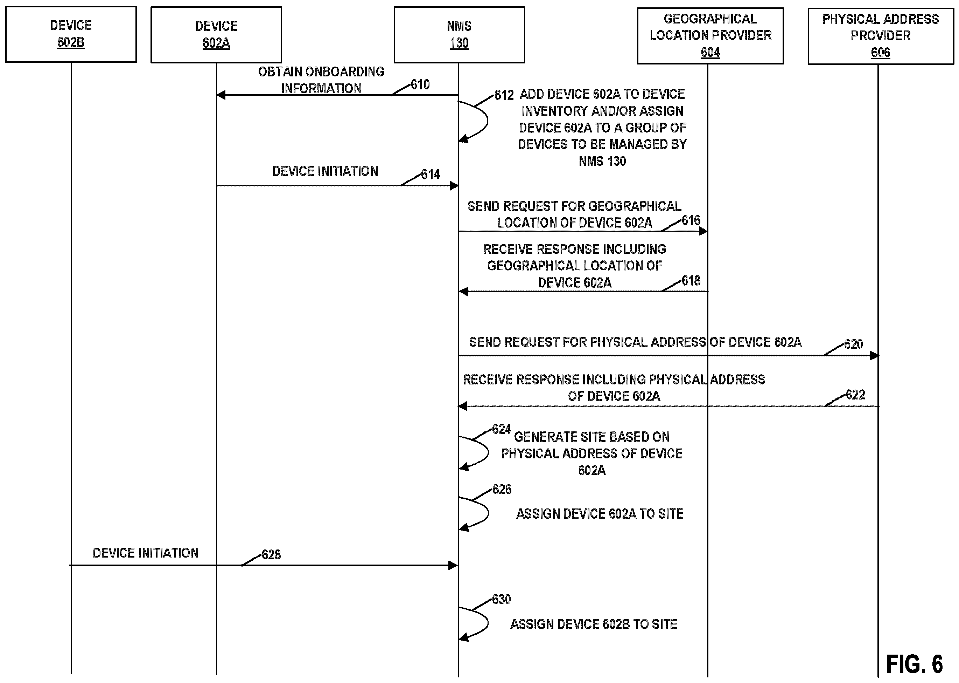

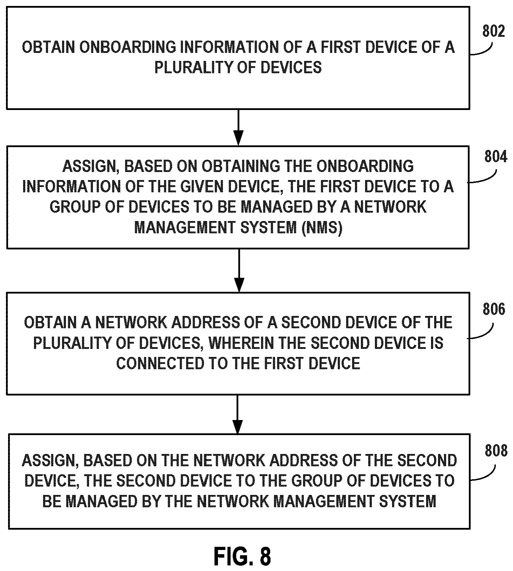

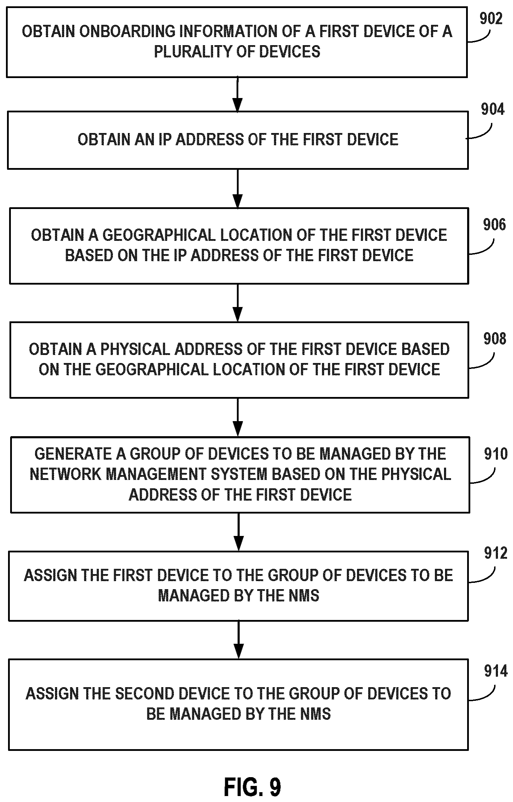

In accordance with one or more techniques of this disclosure, NMS 300 includes device manager 370 that is configured to provide automatic onboarding of a plurality of devices for management by NMS 300. As further described below, device manager 370 of NMS 300 may, in some examples, automatically onboard one or more devices that are connected to a device that has been onboarded based on, for example, a network address of a given device of the plurality of connected devices (as further described in FIG. 5 and FIG. 8). In some examples, device manager 370 of NMS 300 may automatically onboard one or more devices that route traffic through a device that has been onboarded based on, for example, a geographical location of at least one device of the plurality of devices (as further described in FIG. 6 and FIG. 9). In these examples, NMS 300 may obtain address information (e.g., MAC addresses of connected devices and/or geographical location of devices) and store the address information in database 318 (illustrated as address information 340) with which device manager 370 may use to onboard a plurality of devices.

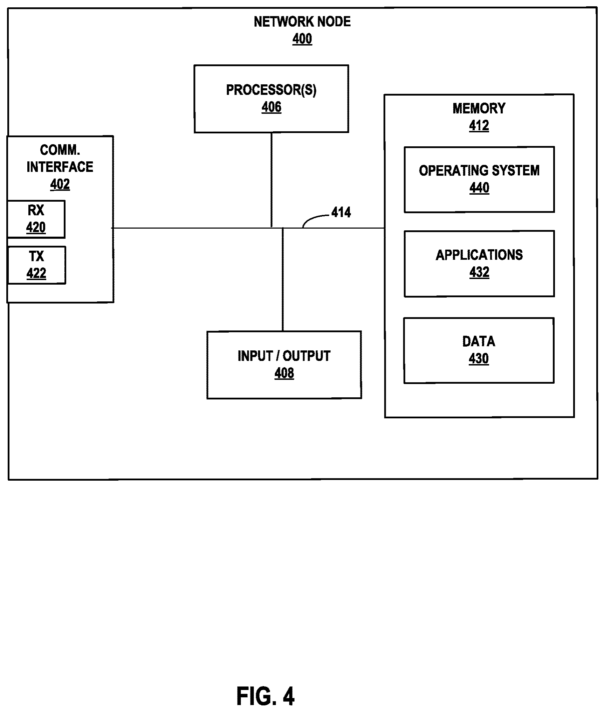

FIG. 4 is a block diagram illustrating an example network node 400 configured according to the techniques described herein. In one or more examples, the network node 400 implements a network device such as, e.g., routers, switches, or the like. In some embodiments, network node 400 of FIG. 4 may represent an example of network node 146 of FIG. 1A, devices of wired network 175 of FIG. 1B, and/or devices of SD-WAN 177.

In this example, network node 400 includes a communications interface 402, e.g., an Ethernet interface, a processor 406, input / output 408, e.g., display, buttons, keyboard, keypad, touch screen, mouse, etc., a memory 412 coupled together via a bus 414 over which the various elements may interchange data and information. Communications interface 402 couples the network node 400 to a network, such as an enterprise network. Though only one interface is shown by way of example, those skilled in the art should recognize that network nodes may, and usually do, have multiple communication interfaces. Communications interface 402 includes a receiver (RX) 420 via which the network node 400, e.g., a router or switch, can receive data and information from one or more servers, such as an AAA server, DHCP server, DNS server, application server, etc. Communications interface 402 includes a transmitter (TX) 422, via which the network node 400 can send data and information, e.g., including configuration information, authentication information, management information, web page data, etc.

Memory 412 stores executable software applications 432, operating system 440, and data/information 430. Operating system 440 may include one or more discovery protocols, such as LLDP, Address Resolution Protocol (ARP), etc., to advertise identifying information of network node 400, such as a network address (e.g., MAC address) or other identifying information. For example, network node 400 may use LLDP to advertise a MAC address of network node 400 to one or more other devices that are connected to network node 400. Similarly, network node 400 may receive a MAC address of the one or more other devices that are connected to network node 400.

Data 430 may include a system log and/or error log that stores SLE metrics for node 400 and/or other devices, such as wireless access points, based on a logging level according to instructions from the network management system. In some examples, data 430 may store data learned from one or more devices connected to network node 400, such as the identifying information (e.g., MAC address) of devices connected to network node 400. Network node 400 may, in some examples, forward data 430 to a network management system (e.g., NMS 130 of FIG. 1A) for analysis and/or for onboarding network node 400 and/or devices connected to network node 400, as described herein.

FIG. 5 is a flowchart of an example operation to onboard a plurality of devices based on a network address of a given device of the plurality of devices, in accordance with one or more techniques of this disclosure. In the example illustrated in FIG. 5, device 502A is described with respect to network node 146A of FIG. 1A and device 502B is described with respect to AP 142A-1 of FIG. 1A. The example described in FIG. 5 is merely an example, and device 502A and device 502B may represent any connected devices and is not limited to the example described in FIG. 5.

In this example, NMS 130 may obtain onboarding information of a first device, e.g., device 502A (510). For example, NMS 130 may obtain a claim code of device 502A (e.g., network node 146A of FIG. 1A). NMS 130 may add (i.e., "claim") device 502A to a device inventory from which NMS 130 can assign one or more devices in the device inventory to a group of devices to be managed by NMS 130 (e.g., group of devices of site 102A in FIG. 1A) and in some examples, may assign device 502A to the group of devices to be managed by NMS 130.

In response to adding device 502A to the device inventory and/or assigning device 502A to the group of devices to be managed by NMS 130 (512), device 502A may exchange information with a second device, e.g., device 502B (e.g., AP 142A-1 of FIG. 1A) that is connected to device 502A. For example, device 502A may send identifying information of device 502A to device 502B. The identifying information exchanged between the connected devices may include network addresses (e.g., MAC addresses) of the devices. For example, device 502A may use a discovery protocol, such as LLDP, to send a MAC address of device 502A to device 502B (514). Similarly, device 502B may use the discovery protocol to send a MAC address of device 502B to device 502A (516).

Device 502A may determine, based on the network address of device 502B, whether device 502B has been claimed. For example, device 502A may determine whether device 502A has binding information associated with device 502A and device 502B (referred to herein as "device binding" or "device mapping"). Device 502A may periodically determine whether device 502A has binding information associated with device 502A and device 502B until device 502A has binding information associated with device 502A and device 502B. The absence of a device binding associated with device 502A and device 502B may indicate that device 502B has not been claimed. As further described below, NMS 130 may generate a device binding associated with device 502A and device 502B if device 502A and device 502B are both claimed, and may send the device binding to device 502A.

Based on determining that device 502A does not have binding information associated with device 502A and device 502B (518), device 502A sends a request to NMS 130 for binding information associated with device 502A and device 502B (520). In response to receiving the request for binding information associated with device 502A and device 502B, NMS 130 may determine whether device 502B is claimed. For example, NMS 130 may determine whether NMS 130 has previously obtained the MAC address of device 502A from device 502B (e.g., AP 142A-1 may send the MAC address of network node 146A to NMS 130 as ap-stats in response to becoming active and learning the MAC address of network node 146A via LLDP). Based on determining that NMS 130 has not obtained identifying information of device 502B (522), NMS 130 does not claim device 502B.

Device 502A and device 502B may again exchange identifying information (524 and 526). In the example of FIG. 5, device 502B may route uplink traffic through device 502A to NMS 130 (528). For example, device 502B may send the identifying information of device 502A that was learned by device 502B to NMS 130 (530).

Device 502A may again determine whether device 502A has binding information associated with device 502A and device 502B. Based on determining that device 502A does not have binding information associated with device 502A and device 502B, device 502A may send another request to NMS 130 for binding information associated with device 502A and device 502B (532). Based on determining that NMS 130 has obtained the MAC address of device 502A from device 502B (534), NMS 130 may determine whether a device binding associated with device 502A and device 502B exists (e.g., whether the device binding is included in device inventory 136 of FIG. 1A). If a device binding associated with device 502A and device 502B does not exist, NMS 130 may claim device 502B to the device inventory from which NMS 130 may assign device 502B to the group of devices to be managed by NMS 130, and in some examples, NMS 130 may further assign device 502B to the group of devices to be managed by NMS 130 if device 502A is assigned to the group of devices (536). In response to claiming device 502B, NMS 130 may generate a device binding associated with device 502A and device 502B (538), stores the device binding in device inventory 136, and/or sends the device binding to device 502A (540).

FIG. 6 is a flowchart of an example operation to onboard a plurality of devices based on geographical location of at least one device of the plurality of devices, in accordance with one or more techniques of this disclosure. In the example illustrated in FIG. 6, device 602A is described with respect to network node 146A of FIG. 1A and device 602B is described with respect to AP 142A-1 of FIG. 1A. The example described in FIG. 6 is merely an example, and device 602A may represent any network device and device 602B may represent any device that routes traffic to NMS 130 through device 602A.

In this example, NMS 130 may obtain onboarding information of a first device, e.g., device 602A (610). For example, NMS 130 may obtain a claim code of device 602A (e.g., network node 146A of FIG. 1A). NMS 130 may add (i.e., "claim") device 602A to a device inventory from which NMS 130 can assign one or more devices in the device inventory to a group of devices to be managed by NMS 130 (e.g., group of devices of site 102A in FIG. 1A), and in some examples, may assign device 602A to the group of devices to be managed by NMS 130.

In response to adding device 602A to the device inventory and/or assigning device 602A to the group of devices to be managed by NMS 130, device 602A may perform device initiation (e.g., Zero Touch Provisioning), e.g., when powered on, and may obtain an IP address via DHCP server 116. Device 602A may send an address (e.g., IP address) of device 602A to NMS 130 (614). NMS 130 may obtain, based on the IP address of device 602A, geographical location (e.g., longitude and latitude) of device 602A. For example, NMS 130 may send a request to geographical location provider 604 (616), which in turn may determine the geographical coordinates of device 602A based on the IP address of device 602A and send the geographical coordinates of device 602A to NMS 130 (618). Based on the geographical location of device 602A, NMS 130 may obtain a physical address (e.g., street number and name, city, state, zip code, etc.) of device 602A. For example, NMS 130 may send a request for a physical address of device 602A to a physical address provider 606 (620), which in turn may determine the physical address of device 602A based on the geographical coordinates of device 602A, and receives a response including the physical address of device 602A (622).

NMS 130 may generate, based on the physical address of device 602A, a site to be managed by NMS 130 (624). For example, NMS 130 may generate a site name for site 102A that is based on the physical address, such as a human-readable descriptor specifying at least a portion of the physical address (e.g., street number and name, city, etc.), and assign device 602A to the generated site (626). NMS 130 may further assign one or more other devices that route traffic through network node 146A to NMS 130 (e.g., devices that share a common source IP address for traffic to the NMS), such as device 602B (e.g., AP 142A-1 of FIG. 1A). For example, device 602B may perform device initiation (e.g., ZTP) and may route traffic to NMS 130 through device 602A (628). NMS 130 may determine that the traffic received from device 602B has the same source IP address as traffic from device 602A, and in response, automatically assigns device 602B to the generated site (630).

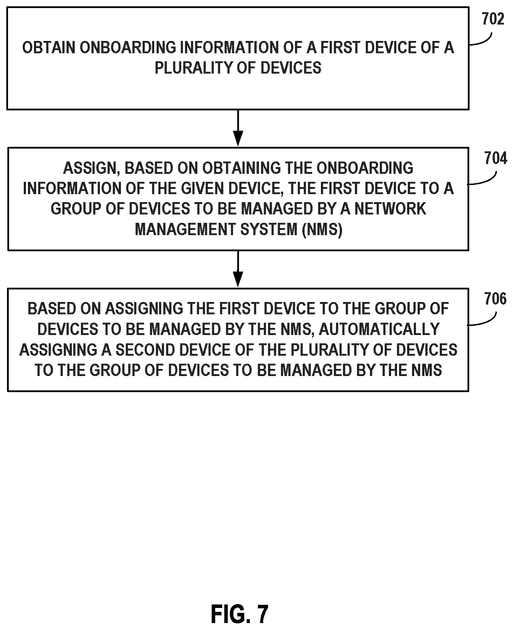

FIG. 7 is a flowchart illustrating an example operation of the network management system to automatically onboard a plurality of devices, in accordance with one or more techniques of this disclosure. The example operation of FIG. 7 is described with respect to device manager 135 of NMS 130 of FIG. 1A.

In this example, NMS 130 obtains onboarding information of a first device of a plurality of devices, such as network node 146A (702). For example, device manager 135 of NMS 130 may obtain a code, such as a claim code, activation code, and/or QR code of network node 146A to onboard network node 146A. NMS 130 assigns, based on obtaining the onboarding information of network node 146A, network node 146A to a group of devices to be managed by NMS 130, such as a group of devices of site 102A (704). For example, device manager 135 of NMS 130 may add (i.e., "claim") network node 146A to device inventory 135 based on the claim code of network node 146A and assigns network node 146A to a group of devices of site 102A to be managed by NMS 130.

Based on assigning network node 146A to the group of devices to be managed by NMS 130, NMS 130 automatically assigns a second device of the plurality of devices, such as AP 142A-1, to the group of devices of site 102A to be managed by NMS 130 (706). As further described below, device manager 135 of NMS 130 may, in some examples, automatically onboard AP 142A-1 to the group of devices of site 102A to be managed by NMS 130 (e.g., group of devices of a site) based on, for example, a network address of a given device of the plurality of devices (as illustrated in FIG. 8) or a geographical location of at least one device of the plurality of devices (as illustrated in FIG. 9).

FIG. 8 is a flowchart illustrating an example operation of the network management system to automatically onboard a plurality of devices based on a network address of a given device of the plurality of devices, in accordance with one or more techniques of this disclosure. The example operation of FIG. 8 is described with respect to device manager 135 of NMS 130 of FIG. 1A.

In this example, NMS 130 obtains onboarding information of a first device of a plurality of devices (802). For example, device manager 135 of NMS 130 may obtain a code of the first device, such as a claim code, activation code, and/or QR code of network node 146A. NMS 130 may assign, based on obtaining onboarding information of the first device, the first device to a group of devices to be managed by NMS 130 (804). For example, device manager 135 of NMS 130 may add (i.e., "claim") network node 146A to device inventory 135 and assigns network node 146A to a group of devices to be managed by NMS 130, such as a group of devices in site 102A.

NMS 130 obtains a network address of a second device of the plurality of devices, wherein the second device is connected to the first device (806). For example, in response to claiming network node 146A, network node 146A may receive a MAC address of AP 142A-1 that is connected to network node 146A. Network node 146A may learn a MAC address of AP 142A-1 that is directly connected to network node 146A, e.g., by utilizing a discovery protocol such as LLDP. AP 142A-1 may also learn the MAC address of network node 146A utilizing the discovery protocol. NMS 130 may obtain the MAC address of AP 142A-1 from network node 146A and determine, based on the MAC address of AP 142A-1, whether AP 142A-1 is claimed. For example, NMS 130 may determine whether NMS 130 previously obtained the MAC address of network node 146A from AP 142A-1 (e.g., step 530 of FIG. 5), which may indicate that AP 142A-1 is active and has received a network address from network node 146A. Based on determining that NMS 130 has obtained the MAC address of network node 146A and the MAC address of AP 142A-1, the NMS may claim AP 142A-1 and automatically assigns AP 142A-1 to site 102A (808).

FIG. 9 is a flowchart illustrating an example operation of the network management system to automatically onboard a plurality of devices based on a geographical location of at least one device of the plurality of devices, in accordance with one or more techniques of this disclosure. The example operation of FIG. 9 is described with respect to device manager 135 of NMS 130 of FIG. 1A.

In this example, NMS 130 obtains onboarding information of a first device of a plurality of devices (902). For example, device manager 135 of NMS 130 may obtain a code of the first device, such as a claim code, activation code, and/or QR code of network node 146A.

NMS 130 may obtain an IP address of the first device (904). For example, network node 146A may perform device initiation (e.g., Zero Touch Provisioning), e.g., when powered on, and may obtain an IP address via DHCP server 116. NMS 130 may obtain the IP address of network node 146A and may obtain geographical coordinates (e.g., longitude and latitude) of network node 146A based on the IP address of network node 146A (906). For example, NMS 130 may send a request to geographical location provider, which in turn may determine the geographical location (e.g., geographical coordinates) of network node 146A based on the IP address of network node 146A and send the geographical coordinates of network node 146A to NMS 130. Based on the geographical coordinates of network node 146A, NMS 130 may obtain a physical address (e.g., street number and name, city, state, zip code, etc.) of network node 146A (908). For example, NMS 130 may send a request for a physical address of network node 146A to a physical address provider, which in turn may determine the physical address of network node 146A based on the geographical coordinates, and sends a response including the physical address of network node 146A.

NMS 130 may generate, based on the physical address of network node 146A, a group of devices to be managed by NMS 130, such as a group of devices of site 102A (910). For example, NMS 130 may generate a site name for site 102A that is based on the physical address, such as a human-readable descriptor specifying at least a portion of the physical address (e.g., street number and name, city, etc.), and assign network node 146A to the generated site (912). NMS 130 may further assign one or more other devices that route traffic through network node 146A to NMS 130 (914). For example, AP 142A-1 may perform device initiation (e.g., ZTP) and may route traffic to NMS 130 through network node 146A. NMS 130 may determine that the traffic received from AP 142A-1 has the same source IP address as traffic from network node 146A, and in response, automatically assigns AP 142A-1 to the generated site.

The techniques described herein may be implemented in hardware, software, firmware, or any combination thereof. Various features described as modules, units or components may be implemented together in an integrated logic device or separately as discrete but interoperable logic devices or other hardware devices. In some cases, various features of electronic circuitry may be implemented as one or more integrated circuit devices, such as an integrated circuit chip or chipset.

If implemented in hardware, this disclosure may be directed to an apparatus such as a processor or an integrated circuit device, such as an integrated circuit chip or chipset. Alternatively, or additionally, if implemented in software or firmware, the techniques may be realized at least in part by a computer-readable data storage medium comprising instructions that, when executed, cause a processor to perform one or more of the methods described above. For example, the computer-readable data storage medium may store such instructions for execution by a processor.

A computer-readable medium may form part of a computer program product, which may include packaging materials. A computer-readable medium may comprise a computer data storage medium such as random-access memory (RAM), read-only memory (ROM), non-volatile random-access memory (NVRAM), electrically erasable programmable read-only memory (EEPROM), Flash memory, magnetic or optical data storage media, and the like. In some examples, an article of manufacture may comprise one or more computer-readable storage media.

In some examples, the computer-readable storage media may comprise non-transitory media. The term "non-transitory" may indicate that the storage medium is not embodied in a carrier wave or a propagated signal. In certain examples, a non-transitory storage medium may store data that can, over time, change (e.g., in RAM or cache).

A computer-readable medium may also or alternatively comprise a transmission medium by which instructions may be conveyed. A computer-readable transmission medium may include carrier waves, transmission signals or the like. A computer-readable transmission medium may convey instructions between components of a single computer system and/or between plural separate computer systems.

The code or instructions may be software and/or firmware executed by processing circuitry including one or more processors, such as one or more digital signal processors (DSPs), general purpose microprocessors, application-specific integrated circuits (ASICs), field-programmable gate arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, functionality described in this disclosure may be provided within software modules or hardware modules.

Therefore, from one perspective, there have been described techniques for onboarding a plurality of devices using a network management system (NMS). The NMS has memory and one or more processors coupled to the memory, the one or more processors configured to obtain onboarding information of a first device of a plurality of devices; assign, based on obtaining onboarding information of the first device, the first device to a group of devices to be managed by the network management system; and based on assigning the first device to the group of devices to be managed by the NMS, automatically assign a second device of the plurality of devices to the group of devices to be managed by the network management system.

Further examples of feature combinations taught by the present disclosure are set out in the following numbered clauses.

Clause 1. A network management system, comprising: memory; and one or more processors coupled to the memory, the one or more processors configured to: obtain onboarding information of a first device of a plurality of devices; assign, based on the onboarding information of the first device, the first device to a group of devices to be managed by the network management system; and based on assigning the first device to the group of devices to be managed by the network management system, automatically assign a second device of the plurality of devices to the group of devices to be managed by the network management system.

Clause 2. The network management system of clause 1, wherein to automatically assign the second device of the plurality of devices to the group of devices to be managed by the network management system, the one or more processors are configured to: obtain a network address of the second device of the plurality of devices, wherein the second device is connected to the first device; and assign, based on the network address of the second device, the second device to the group of devices to be managed by the network management system.

Clause 3. The network management system of clause 2, wherein the network address of the second device comprises a MAC address of the second device.

Clause 4. The network management system of clause 2 or 3, wherein to obtain the network address of the second device, the one or more processors are configured to: obtain the network address of the second device from the first device.

Clause 5. The network management system of any preceding clause, wherein to assign the first device to the group of devices to be managed by the network management system, the one or more processors are configured to: obtain an IP address of the first device, obtain a geographical location of the first device based on the IP address of the first device; obtain a physical address of the first device based on the geographical location of the first device; generate the group of devices to be managed by the network management system based on the physical address of the first device; and assign the first device to the group of devices to be managed by the network management system.

Clause 6. The network management system of clause 5, wherein to automatically assign the second device of the plurality of devices to the group of devices to be managed by the network management system, the one or more processors are configured to: receive, from the second device, traffic comprising a source IP address associated with the first device; and assign, based on the traffic comprising the source IP address associated with the first device, the second device to the group of devices to be managed by the network management system.

Clause 7. The network management system of clause 5 or 6, wherein to generate the group of devices to be managed by the network management system, the one or more processors are further configured to: generate a group name of the group of devices to be managed by the network management system based on the physical address of the first device.

Clause 8. The network management system of clause 5, 6 or 7, wherein the first device comprises a network device at an edge of a network for a site.

Clause 9. The network management system of any preceding clause, wherein the first device and second device are directly connected.

Clause 10. The network management system of any preceding clause, wherein the second device routes traffic to the network management system through the first device.

Clause 11. A method comprising: obtaining, by a network management system, onboarding information of a first device of a plurality of devices; assigning, by the network management system and based on the onboarding information of the first device, the first device to a group of devices to be managed by the network management system; and based on assigning the first device to the group of devices to be managed by the network management system, automatically assigning, by the network management system, a second device of the plurality of devices to the group of devices to be managed by the network management system.

Clause 12. The method of clause 11, wherein automatically assigning the second device of the plurality of devices to the group of devices to be managed by the network management system comprises: obtaining, by the network management system, a network address of the second device of the plurality of devices, wherein the second device is connected to the first device; and assigning, by the network management system and based on the network address of the second device, the second device to the group of devices to be managed by the network management system.

Clause 13. The method of clause 12, wherein the network address of the second device comprises a MAC address of the second device.

Clause 14. The method of clause 12 or 13, wherein obtaining the network address of the second device comprises obtaining the network address of the second device from the first device.

Clause 15. The method of any of clauses 11 to 14, wherein assigning the first device to the group of devices to be managed by the network management system comprises: obtaining, by the network management system, an IP address of the first device; obtaining, by the network management system, a geographical location of the first device based on the IP address of the first device; obtaining, by the network management system, a physical address of the first device based on the geographical location of the first device; generating, by the network management system, the group of devices to be managed by the network management system based on the physical address of the first device; and assigning, by the network management system, the first device to the group of devices to be managed by the network management system.

Clause 16. The method of clause 15, wherein automatically assigning the second device of the plurality of devices to the group of devices to be managed by the network management system comprises: receiving, by the network management system and from the second device, traffic comprising a source IP address associated with the first device; and assigning, by the network management system and based on the traffic comprising the source IP address associated with the first device, the second device to the group of devices to be managed by the network management system.

Clause 17. The method of clause 15 or 16, wherein generating the group of devices to be managed by the network management system comprises: generating, by the network management system, a group name of the group of devices to be managed by the network management system based on the physical address of the first device.

Clause 18. The method of any of clauses 11 to 17, wherein the first device and second device are directly connected.

Clause 19. The method of any of clauses 11 to 18, wherein the second device routes traffic to the network management system through the first device.

Clause 20. Computer-readable media comprising instructions that, when executed, cause one or more processors of a network management system to: obtain onboarding information of a first device of a plurality of devices; assign, based on obtaining onboarding information of the first device, the first device to a group of devices to be managed by the network management system; and based on assigning the first device to the group of devices to be managed by the network management system, automatically assign a second device of the plurality of devices to the group of devices to be managed by the network management system.

## Claims

1. A network management system, comprising:
memory; and
one or more processors coupled to the memory, the one or more processors configured to:
obtain onboarding information of a first device of a plurality of devices;
assign, based on the onboarding information of the first device, the first device to a group of devices to be managed by the network management system; and
based on assigning the first device to the group of devices to be managed by the network management system, automatically assign a second device of the plurality of devices to the group of devices to be managed by the network management system.

2. The network management system of claim 1, wherein to automatically assign the second device of the plurality of devices to the group of devices to be managed by the network management system, the one or more processors are configured to:
obtain a network address of the second device of the plurality of devices, wherein the second device is connected to the first device; and
assign, based on the network address of the second device, the second device to the group of devices to be managed by the network management system.

3. The network management system of claim 2, wherein the network address of the second device comprises a MAC address of the second device.

4. The network management system of any of claims 2-3, wherein to obtain the network address of the second device, the one or more processors are configured to:
obtain the network address of the second device from the first device.

5. The network management system of claim 1,
wherein to assign the first device to the group of devices to be managed by the network management system, the one or more processors are configured to:
obtain an IP address of the first device,
obtain a geographical location of the first device based on the IP address of the first device;
obtain a physical address of the first device based on the geographical location of the first device;
generate the group of devices to be managed by the network management system based on the physical address of the first device; and
assign the first device to the group of devices to be managed by the network management system.

6. The network management system of claim 5, wherein to automatically assign the second device of the plurality of devices to the group of devices to be managed by the network management system, the one or more processors are configured to:
receive, from the second device, traffic comprising a source IP address associated with the first device; and
assign, based on the traffic comprising the source IP address associated with the first device, the second device to the group of devices to be managed by the network management system.

7. The network management system of any of claims 5-6, wherein to generate the group of devices to be managed by the network management system, the one or more processors are further configured to:
generate a group name of the group of devices to be managed by the network management system based on the physical address of the first device.

8. The network management system of any of claims 5-7, wherein the first device comprises a network device at an edge of a network for a site.

9. The network management system of any of claims 1-8, wherein the first device and second device are directly connected.

10. The network management system of any of claims 1-9, wherein the second device routes traffic to the network management system through the first device.

11. A method comprising:
obtaining, by a network management system, onboarding information of a first device of a plurality of devices;
assigning, by the network management system and based on the onboarding information of the first device, the first device to a group of devices to be managed by the network management system; and
based on assigning the first device to the group of devices to be managed by the network management system, automatically assigning, by the network management system, a second device of the plurality of devices to the group of devices to be managed by the network management system.

12. The method of claim 11, further comprising steps corresponding to the functionality recited in any of claims 2-10.

13. A computer-readable medium encoded with instructions for causing one or more programmable processors to become configured to perform the method recited by any of claims 11-12.
